# EUROPEAN PATENT APPLICATION

(11) **EP 3 142 109 A1**
(43) Date of publication of application: **15.03.2017**
(21) Application number: 16179935.8
(22) Date of filing: 18.07.2016
(51) Int. Cl.: G10L 15/30, G10L 15/32

(54) **DEVICE AND METHOD FOR OPERATING A PLURALITY VOICE RECOGNITION ENGINES IN PARALLEL**

(30) Priority: 14.09.2015 KR 20150129901
(71) Applicant: Samsung Electronics Co., Ltd., Suwon-si, Gyeonggi-do 16677 (KR)
(72) Inventor: BAE, Jae-hyun, Gyeonggi-do (KR)
(74) Representative: Appleyard Lees IP LLP

(57) **Abstract**

An electronic device, a method for driving the electronic device, a voice recognition device, a method for driving the voice recognition device, and a non-transitory computer readable recording medium are provided. A voice recognition system includes an electronic device configured to selectively transmit a voice signal for voice utterance given by a user to an outside; and a voice recognition device configured to determine, as a recognition result of the transmitted voice signal, the recognition result that satisfies a predetermined condition among recognition results that are obtained by performing parallel processing of the transmitted voice signal through a plurality of voice recognizers and to provide the determined recognition result to the electronic device.

## Description

### CROSS-REFERENCE TO RELATED APPLICATION

This application claims priority from Korean Patent Application No. 10-2015-0129901, filed on September 14, 2015 in the Korean Intellectual Property Office, the disclosure of which is incorporated herein by reference in its entirety.

### BACKGROUND

### 1. Field

The present disclosure relates to an electronic device, a method for driving the electronic device, a voice recognition device, a method for driving the voice recognition device, and a non-transitory computer readable recording medium, and more particularly, to an electronic device, a method for driving the electronic device, a voice recognition device, a method for driving the voice recognition device, and a non-transitory computer readable recording medium, which can rapidly and accurately obtain the recognition result of voice utterance that is received, for example, from a user by simultaneously operating a plurality of voice recognizers that are mounted on the electronic device or connected to a network.

### 2. Description of the Related Art

In general, an electronic device, such as a TV, may include various kinds of voice recognition engines (voice recognizers). For example, one voice recognition engine may operate when recognizing a preregistered command, while another voice recognition engine may operate when processing voice utterance for a retrieval operation. Such operations may be performed as being prescribed by an ordinary system designer, and in the related art, one of several available recognizers is selected using arbitration to calculate the recognition result. Here, the dictionary meaning of arbitration is, for example, to operate several central processing units (CPUs) through mutual control thereof.

In the related art, for example, a voice recognizer to be operated is selected in accordance with dictionary conditions on which the voice recognizer can be used, such as existence/nonexistence of network connection before the retrieval result is obtained, designation of recognition domain (i.e., region), and idle resources of a device that performs voice recognition. For example, in the case of selection between a voice recognizer connected to a network and an embedded voice recognizer in the device, the voice recognizer to be used is selected in accordance with the existence/nonexistence of the network connection and a communication speed.

As another method, the optimum recognition result is selected through gathering of all the recognition results of one or more embedded recognizers in the device and one or more recognizers connected to a wired/wireless network.

That is, in the case where one or more embedded recognizers or recognizers using the network are mixedly used in the device, the related art may correspond to a method for selecting a voice recognizer to be operated on the basis of the dictionary information on whether to be connected to a designated recognition domain or the Internet, a method for predetermining which voice recognizer is to be used in accordance with the use purpose or domain, or a method for selecting the optimum result after receiving all the operation results of several recognizers.

According to the related art, however, if utterance that does not coincide with the dictionary information is input, a recognition rate may be lowered, and there is a possibility of failure in deriving the optimum result.

Further, it is required to select the optimum result after reception of the results of all voice recognizers, and if the result reception time for each recognizer differs, it would be unable to quickly derive the final result for the voice utterance.

### SUMMARY

Exemplary embodiments of the present disclosure overcome the above disadvantages and other disadvantages not described above, and provide an electronic device, a method for driving the electronic device, a voice recognition device, a method for driving the voice recognition device, and a non-transitory computer readable recording medium, which can rapidly and accurately obtain the recognition result of voice utterance that is received, for example, from a user by simultaneously operating a plurality of voice recognizers that are mounted on the electronic device or connected to a network.

According to an aspect of the present disclosure, a voice recognition system includes an electronic device configured to selectively transmit a voice signal for voice utterance given by a user to an outside, and a voice recognition device configured to determine, as a recognition result of the transmitted voice signal, a recognition result that satisfies a predetermined condition among recognition results that are obtained by performing parallel processing of the transmitted voice signal through a plurality of voice recognizers and to provide the determined recognition result to the electronic device.

According to another aspect of the present disclosure, a voice recognition device includes a communication interface configured to receive, from an electronic device, a voice signal for voice utterance given by a user, and a voice recognition processor configured to determine, as a recognition result of the received voice signal, the recognition result that satisfies a predetermined condition among recognition results that are obtained by performing parallel processing of the received voice signal through a plurality of voice recognizers and to control the communication interface to transmit the determined recognition result to the electronic device.

The voice recognition processor may determine whether to satisfy the predetermined condition using a response speed for outputting the recognition result and similarity indicating confidence of the recognition result.

The voice recognition processor may provide the recognition result, which has the similarity that is larger than a predetermined threshold value among the recognition results having a high response speed, to the electronic device.

If there are a plurality of recognition results having the similarity that is smaller than the predetermined threshold value among prior order recognition results having the high response speed, the voice recognition processor may confirm the recognition result to be provided to the electronic device with reference to the recognition result that is provided in a next order within a predetermined time range.

The voice recognition processor may select the prior order recognition result that coincides with the next-order recognition result and may provide the selected prior order recognition result to the electronic device.

If there is no recognition result that is obtained from the plurality of voice recognizers within the predetermined time range, the voice recognition processor may notify the electronic device that there is no recognition result.

The voice recognition processor performs the parallel processing by processing the received voice signal through a first voice recognizer among the plurality of voice recognizers and processing the received voice signal through a second voice recognizer among the plurality of voice recognizers.

According to still another aspect of the present disclosure, a method for driving a voice recognition device includes receiving, from an electronic device, a voice signal for voice utterance given by a user, determining as a recognition result of the received voice signal, the recognition result that satisfies a predetermined condition among recognition results that are obtained by performing parallel processing of the received voice signal through a plurality of voice recognizers, and providing the determined recognition result to the electronic device.

The determining the recognition result may include determining whether to satisfy the predetermined condition using a response speed for outputting the recognition result and similarity indicating confidence of the recognition result.

The providing the determined recognition result to the electronic device may include providing the recognition result, which has the similarity that is larger than a predetermined threshold value among the recognition results having a high response speed, to the electronic device.

The determining the recognition result may include confirming the recognition result to be provided to the electronic device with reference to the recognition result that is provided in a next order within a predetermined time range if there are a plurality of recognition results having the similarity that is smaller than the predetermined threshold value among prior order recognition results having the high response speed.

The providing the determined recognition result to the electronic device may include selecting a prior order recognition result that coincides with the next-order recognition result and providing the selected prior order recognition result to the electronic device.

The method according to the aspect of the present disclosure may further include notifying the electronic device that there is not recognition result if there is no recognition result that is obtained from the plurality of voice recognizers within the predetermined time range.

The performing parallel processing processes the received voice signal through a first voice recognizer among the plurality of voice recognizers and processes the received voice signal through a second voice recognizer among the plurality of voice recognizers.According to still another aspect of the present disclosure, a non-transitory computer readable recording medium storing a program for executing a method for driving a voice recognition device, wherein the method for driving a voice recognition device includes receiving, from an electronic device, a voice signal for voice utterance given by a user, determining, as a recognition result of the received voice signal, the recognition result that satisfies a predetermined condition among recognition results that are obtained by performing parallel processing of the received voice signal through a plurality of voice recognizers, and providing the determined recognition result to the electronic device.

According to still another aspect of the present disclosure, an electronic device includes a voice acquirer configured to acquire a voice signal for voice utterance given by a use, and a voice recognition processor configured to determine, as a recognition result of the acquired voice signal, a recognition result that satisfies a predetermined condition among recognition results that are obtained by providing the acquired voice signal to a plurality of voice recognizers and to perform an operation according to the determined recognition result.

The electronic device according to the aspect of the present disclosure may further include a communication interface configured to transmit the acquired voice signal to an external voice recognition device.

According to still another aspect of the present disclosure, a method for driving an electronic device includes acquiring a voice signal for voice utterance given by a user, determining, as a recognition result of the acquired voice signal, a recognition result that satisfies a predetermined condition among recognition results that are obtained by performing parallel processing of the acquired voice signal through a plurality of voice recognizers, and performing an operation according to the determined recognition result.

The method for driving an electronic device according to the aspect of the present disclosure may further include transmitting the acquired voice signal to an external voice recognition device.

Additional and/or other aspects and advantages of the disclosure will be set forth in part in the description which follows and, in part, will be obvious from the description, or may be learned by practice of the disclosure.

### BRIEF DESCRIPTION OF THE DRAWINGS

The above and/or other aspects of the present disclosure will be more apparent by describing certain exemplary embodiments of the present disclosure with reference to the accompanying drawings, in which:
FIG. 1 is a diagram illustrating a voice recognition system according to a first exemplary embodiment of the present disclosure;
FIG. 2 is a diagram illustrating a voice recognition system according to a second exemplary embodiment of the present disclosure;
FIG. 3 is a block diagram exemplifying a detailed configuration of the image display device in FIGS. 1 and 2;
FIG. 4 is a block diagram exemplifying another detailed configuration of the image display device in FIGS. 1 and 2;
FIG. 5 is a block diagram exemplifying still another detailed configuration of the image display device in FIGS. 1 and 2;
FIG. 6 is a diagram exemplifying a configuration of a controller in FIG. 5;
FIG. 7 is a block diagram exemplifying a detailed configuration of a voice recognition processor and a voice recognition executor in FIGS. 3 to 5;
FIG. 8 is a block diagram exemplifying a detailed configuration of the voice recognition device of FIGS. 1 and 2;
FIG. 9 is a block diagram exemplifying another detailed configuration of the voice recognition device of FIGS. 1 and 2;
FIG. 10 is a block diagram exemplifying a detailed configuration of a voice recognition processor and a voice recognition executor in FIGS. 8 and 9;
FIG. 11 is a diagram exemplifying a voice recognition process in the system of FIG. 1;
FIG. 12 is a diagram exemplifying another voice recognition process in the system of FIG. 1;
FIG. 13 is a diagram exemplifying a voice recognition process in the system of FIG. 2;
FIG. 14 is a flowchart illustrating a process of driving an image display device according to an exemplary embodiment of the present disclosure;
FIG. 15 is a flowchart illustrating a process of driving a voice recognition device according to a first exemplary embodiment of the present disclosure; and
FIG. 16 is a flowchart illustrating a process of driving a voice recognition device according to a second exemplary embodiment of the present disclosure.

### DETAILED DESCRIPTION OF EXEMPLARY EMBODIMENTS

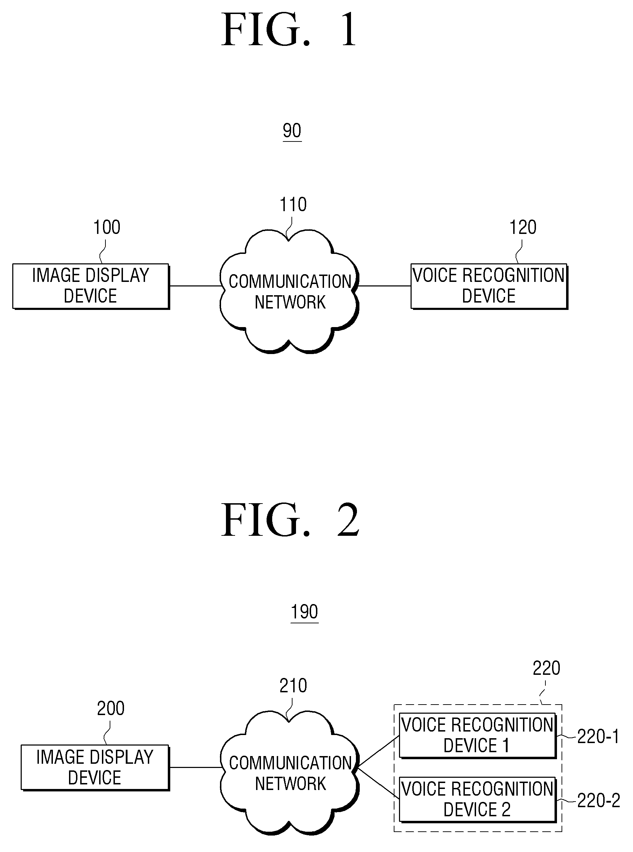

FIG. 1 is a diagram illustrating a voice recognition system according to a first exemplary embodiment of the present disclosure.

As illustrated in FIG. 1, a voice recognition system 90 according to a first exemplary embodiment of the present disclosure may include a part or the whole of an image display device 100, a communication network 110, and a voice recognition device 120.

Here, the term "include a part or the whole" means that the communication network 110 may be omitted from the system 90, and the image display device 100 and the voice recognition device 120 may perform direct communication (e.g., P2P), or the image display device 100 may perform voice recognition operation by itself in a stand-alone form without being associated with the communication network 110 or the voice recognition device 120. To help sufficient understanding of the present disclosure, it is assumed that the system includes the whole of them.

The image display device 100 includes a device that can display an image, such as a portable phone, a laptop computer, a desktop computer, a tablet PC, a PDP, an MP3, or a TV. Further, the image display device 100 according to an exemplary embodiment of the present disclosure may be one of cloud terminals. In other words, in the case where a user gives voice utterance (or user command) in the form of a word or a sentence to execute a specific function of the image display device 100 or to perform an operation of the image display device 100, the image display device 100 may acquire such voice utterance (or speech sound) and provide the acquired voice utterance to the voice recognition device 120 through the communication network 110 in the form of audio data (or voice signal). Thereafter, the image display device 100 receives the recognition result for the voice utterance from the voice recognition device 120 and performs a specific function or operation based on the received recognition result. Here, the term "execute a specific function or perform an operation" means to execute an application (hereinafter referred to as "appl") that is displayed on a screen or to perform an operation, such as power-off, channel switching, or volume control. In this process, the image display device 100 may notify a user of execution of an appl through pop-up of a predetermined Ul window on the screen.

In order to operate as a cloud terminal, the image display device 100 according to an exemplary embodiment of the present disclosure may not have an embedded voice recognition engine, that is, a voice recognizer. Here, the voice recognition engine may be the upper concept including the voice recognizer. The image display device 100 may acquire user's voice utterance and then provide the acquired voice utterance to the voice recognition device 120 in the form of audio data. If the image display device 100 includes the voice recognizer, the image display device 100 may be provided with the embedded voice recognizer having a level that is equal to or lower than the level of the voice recognition device 120. For example, if the image display device 100 is provided with the voice recognizer having an equal level, it may process ordinary voice recognition by itself. However, in the case where the image display device 100 has an internal load, it may request the external voice recognition device 120 to perform the voice recognition.

As described above, in the case where the image display device 100 has an embedded voice recognizer, it may determine whether to process the voice recognition by itself or through the external voice recognition device 120. For example, if the image display device 100 is provided with an embedded voice recognizer of a low level, it can confirm the utterance length of the received voice utterance. Accordingly, with respect to the voice utterance having a short utterance length, the image display device 100 may generate the recognition result through the embedded voice recognizer. Further, the image display device 100 may perform an operation, such as volume control or channel switching, using the generated recognition result, or may provide the recognition result to an external retrieval server to request the retrieval result.

In the case where the image display device 100 includes the voice recognizer having a level that is equal to the level of the voice recognition device 120, the image display device 100 may appropriately perform the voice recognition through determination of internal operation state or network state. For example, if the image display device 100 is bearing a heavy burden with a task to be internally processed, that is, if the image display device 100 has a load of resources to perform the voice recognition using internal hardware or software resources, the image display device 100 transmits audio data of a received voice command to the voice recognition device 120. In contrast, if it is determined that the network state of the communication network 110 is not good, the image display device 100 may process the voice recognition by itself even though it bears a heavy burden with a load.

As described above, the image display device 100 may determine whether to internally process the voice utterance or to process the voice utterance through the external voice recognition device 120, and if it is determined to process the voice utterance using internal resources, the image display device 100 may simultaneously operate a plurality of voice recognizers embedded therein to obtain the recognition result for the received voice utterance. In other words, the image display device 100 may have various voice recognizers that coincide with respective purposes. For example, in the case of requesting retrieval from a retrieval server, the image display device 100 may execute a voice recognizer such as *-Voice, and may execute a voice recognizer for recognizing a "trigger word" such as "High TV" that is an utterance start word for starting the voice recognition.

In discriminating between voice recognizers, since "channel switching" may be related to tuner control and "volume control" may be related to volume adjustment of a speaker, they correspond to voice recognizers for controlling a basic function or hardware resources. In contrast, "High TV" or the like may correspond to a voice recognizer for executing an additional function such as a specific appl or software resources. Further, the plurality of voice recognizers may include a recognizer for recognizing a predetermined word candidate and a recognizer for recognizing a word or a sentence that is not predetermined.

The image display device 100 according to an exemplary embodiment of the present disclosure may simultaneously operate the plurality of voice recognizers embedded therein, and may determine whether to use the recognition result of the voice recognizer that gives the earliest response, that is, the earliest recognition result as the acquired recognition result for the voice utterance. Generally, when the respective voice recognizers give the recognition results for the received voice utterance, they also give similarities (or similarity scores) related to accuracies, that is, confidence levels, of the corresponding recognition results, and the image display device 100 confirms the recognition result having a high similarity score among the recognition results having a high response speed as the recognition result for the voice utterance given by the user. Through this, the image display device 100 performs the operation intended by the user. Accordingly, if the recognition result of the voice recognizer that gives the earliest recognition result has a high similarity score, the image display device 100 may use only the corresponding recognition result while discarding the remaining recognition results.

However, the image display device 100 may further determine whether the predetermined condition is satisfied in order to derive the recognition result having higher accuracy. For example, in order to immediately operate the image display device 100 when the user gives the voice utterance, only the recognition results that are within a predetermined time range can be used. Further, the similarity score of the recognition result in a given time should exceed a predetermined threshold value. Accordingly, the recognition result that exceeds the threshold value may be unconditionally reflected as the recognition result of the operation intended by the user. Since one recognizer can simultaneously give a plurality of recognition results, a plurality of recognition results that exceed the threshold value may exist. In this case, the recognition result having a high similarity score can be confirmed as the final recognition result. However, if the difference between similarity scores is not so large, other additional information may be utilized.

For example, so far as the recognition results are within the given time, the next-order recognition result is further confirmed. If there is the prior order (or earlier order) recognition result that coincides with the next-order recognition result as the result of the confirmation, the corresponding recognition result is finally confirmed. However, if there is not the prior order recognition result that coincides with the next-order recognition result, the recognition result having the highest similarity score among the plurality of recognition results may be finally confirmed unless the difference in similarity score between the plurality of next-order recognition results deviates from a predetermined threshold difference value. This will be described in detail later.

Further, the recognition result that commonly exists may be finally confirmed with reference to the recognition result provided from a neighboring voice recognition device 120. If the recognition results having the similarity score that is higher than the threshold value do not exist, but only the recognition results having the similarity score that is lower than the threshold value exist, the recognition results having the similarity score that is in a relatively high similarity range may be utilized. Even in this case, the recognition result provided from the neighboring voice recognition device 120 may be referred to.

As described above, since the image display device 100 simultaneously operates, that is, performs parallel processing of, a plurality of voice recognizers which have the same purpose or use purpose but have different domains of voice recognition, it can use the recognition result of the voice recognizer having a high response speed, and thus the voice recognition operation can be quickly performed. Further, since the recognition result that satisfies the predetermined condition among the acquired recognition results within the predetermined time is finally confirmed, the accuracy can be increased to that extent.

In an exemplary embodiment of the present disclosure, simultaneous operation of a plurality of voice recognizers is called "parallel processing." The term "parallel processing" means that a plurality of voice recognizers are connected in parallel with respect to different inputs and outputs, and thus an input path for inputting voice utterance, more particularly, audio data for the voice utterance, and an output path for outputting the recognition result are clearly different from each other. In this point, the "parallel processing" is clearly different from "distribution processing" with one input and one output. Here, the term "distribution processing" means that voice utterances are not simultaneously input.

The communication network 110 includes both wired and wireless communication networks. Here, the wired communication network includes the Internet, such as a cable network and a PSTN (Public Switched Telephone Network), and the wireless communication network includes CDMA, WCDMA, GSM, EPC (Evolved Packet Core), LTE (Long Term Evolution), and WiBro networks. The communication network 110 according to an exemplary embodiment of the present disclosure is not limited thereto, but may be used, for example, in a cloud computing network in a cloud computing environment as a connection network of the next-generation mobile communication system to be implemented in future. For example, if the communication network 110 is a wired communication network, an access point in the communication network 110 may be connected to an exchange of a telephone office, whereas if the communication network 110 is a wireless communication network, the access point may be connected to SGSN or GGSN (Gateway GPRS Support Node) that is operated by a communication company to process data, or may be connected to various relays, such as BTS (Base Station Transmission), NodeB, and e-NodeB, to process data.

The communication network 110 may include an access point. The access point includes a small base station, such as a femto or pico base station, which is mainly installed in a building. Here, the femto or pico base station is discriminated depending on how many image display devices 100 can be maximally connected therein in accordance with the classification of the small base station. The access point may include a short-range communication module that performs short-range communication, such as ZigBee or Wi-Fi, with the image display device 100. The access point may use TCP/IP or RTSP (Real-Time Streaming Protocol) for wireless communication. Here, the short-range communication may be performed in various standards, such as Bluetooth, ZigBee, IrDA (Infrared Data Association), RF (Radio Frequency) and UWB (Ultra Wide Band) communication, such as UHF (Ultra High Frequency) and VHF (Very High Frequency). Accordingly, the access point may extract the location of a data packet, designate the best communication path for the extracted location, and transfer the data packet to a next device, for example, the image display device 100, in accordance with the designated communication path. The access point may share several lines in a general network environment, and may include, for example, a router, a repeater, and a relay.

The voice recognition device 120 may include a voice recognition server, and may operate as a kind of cloud server. In other words, the voice recognition device 120 may be provided with all (or partial) hardware or software resources related to voice recognition, and may generate and provide the recognition result for the voice utterance that is received from the image display device 100 that has minimum resources. The voice recognition device 120 according to an exemplary embodiment of the present disclosure is not limited to the cloud server. For example, in the case where the image display device 100, from which the communication network 110 is omitted, performs direct communication with the voice recognition device 120, the voice recognition device 120 may be an external device such as an access point or a peripheral device such as a desktop computer. Further, the voice recognition device 120 may be any type of device so far as it can provide the recognition result for a sound signal, more accurately, audio data, which is provided from the image display device 100. In this point, the voice recognition device 120 may be a recognition result providing device.

If audio data for voice utterance given by a user is received from the image display device 100, the voice recognition device 120 according to an exemplary embodiment of the present disclosure may derive the corresponding recognition result. If a user utters the name of a sport star to request retrieval, the voice recognition device 120 may provide the retrieval result that is retrieved on the basis of the recognition result of the voice utterance that corresponds to a retrieval word. In contrast, if voice utterance for operating hardware (e.g., tuner) or software (e.g., appl) of the image display device 100 is given, the voice recognition device 120 may provide the corresponding recognition result.

In this process, as can be fully seen with explanation of the image display device 100 as described above, the voice recognition device 120 may perform the voice recognition, and may derive the optimum recognition result that is intended by a user through simultaneous operation of a plurality of voice recognizers that perform voice recognitions of different domains. For example, if it is assumed that a user utters "How's the weather today?", the image display device 100 may provide corresponding audio data to the voice recognition device 120.

Then, the voice recognition device 120 inputs the audio data for the voice utterance given by the user to the plurality of voice recognizers. In this case, a certain voice recognizer may give the accurate recognition result based on a text "How's the weather today". Further, the voice recognizer may also output a corresponding similarity score. In contrast, a certain voice recognizer may give the recognition result, such as "MBC" or "SBS" with respect to the input "How's the weather today", and may also output a corresponding similarity score. In this case, the voice recognition device 120 confirms (or analyzes) the recognition result of the voice recognizer that has a high response speed, that is, that gives the first recognition result. For this, the voice recognition device 120 may confirm the similarity score that is related to the recognition result of the voice recognition device 120. For example, if the recognition result of "MBC" or "SBS" that was first output has a low similarity score, the voice recognition device 120 finds the optimum recognition result for the operation intended by the user through confirming of the recognition result of the voice recognizer that has output "How's the weather today" within a predetermined time range and the similarity score of the corresponding recognition result in order to rapidly respond to the user. Accordingly, the voice recognition device 120 can provide a response to a user query to the image display device 100.

In an exemplary embodiment of the present disclosure, in order to find the optimum recognition result as described above, the recognition result having the earliest response may be most preferentially considered, and in order to heighten accuracy, the similarity scores of the recognition results that are within the predetermined time range may be confirmed. Since other detailed contents related to this have been fully explained with the explanation of the image display device 100, further explanation thereof will be omitted.

As described above, in order to derive the optimum recognition result for the voice utterance given by the user, the image display device 100 or the voice recognition device 120 simultaneously operates all internal resources related to the voice recognition, and derives the recognition result that satisfies a specific condition among the at least one recognition result to simultaneously increase the response speed and accuracy.

In other words, by selecting a recognizer to be pre-operated before the operation of the recognizer in the related art, the correct result can be obtained, and only the result of the recognizer having an early response can be relatively accurately responded to the user. Accordingly, it is not necessary to wait for the recognition results of the recognizers having a low response speed in accordance with the operation environment of the recognizers for comparison purposes. That is, in an exemplary embodiment of the present disclosure, since several recognizers are simultaneously used, it is possible to select an accurate and rapid response, that is, the recognition result, and thus recognition accuracy and high response speed could be expected.

Up to now, it is described that the voice recognition device 120 operates in association with the image display device 100. However, according to an exemplary embodiment of the present disclosure, the voice recognition device 120 can be used in all devices that support the voice recognition, such as a door system and an automobile, and even in this case, the voice recognition device 120 can be utilized in all embedded and server recognizers. Here, the term "embedded" means that the above-described voice recognition can be performed in an individual device, such as the image display device 100, without being associated with the server. Accordingly, in an exemplary embodiment of the present disclosure, the above-described devices may be commonly named "electronic device" or "user device".

FIG. 2 is a diagram illustrating a voice recognition system according to a second exemplary embodiment of the present disclosure.

As illustrated in FIG. 2, a voice recognition system 190 according to a second exemplary embodiment of the present disclosure includes a part or the whole of an image display device 200, a communication network 210, and a plurality of voice recognition devices 220. Here, the term "includes a part or the whole" has the same meaning as that as described above.

In comparing the voice recognition system 190 of FIG. 2 with the voice recognition system 90 of FIG. 1, voice recognition device 1 220-1 of FIG. 2 operates as a main device to receive the recognition result for voice utterance given by a user from a peripheral, and more accurately, external voice recognition device 2 220-2.

For example, if a user gives the voice utterance to the image display device 200, audio data of the acquired voice utterance is simultaneously provided to voice recognition device 1 220-1 and voice recognition device 2 220-2. In this case, it is preferable that the voice recognition device 1 220-1 and voice recognition device 2 220-2 have voice recognizers that belong to the same domain for the voice recognition.

Accordingly, as fully explained above with reference to FIG. 1, voice recognition device 1 220-1 performs the same operation as the operation of the voice recognition device 120. Typically, one recognizer may not give one recognition result, but may give a plurality of recognition results in a range in which similarity scores are similar to each other. In this case, since the similarity scores are similar to each other, it may be difficult to confirm which recognition result coincides with the voice utterance given by the user. In consideration of this, voice recognition device 1 220-1 selects the recognition result that corresponds to the same name (or title) with reference to the recognition result that is provided from voice recognition device 2 220-2, and thus accuracy can be further heightened.

Further, when a plurality of voice recognition devices 220 interlock with each other, voice recognition device 2 220-2 may provide the recognition result when voice recognition device 1 220-1 requests the recognition result. However, even if there is no separate request, it is possible without limit to provide the recognition results in the order of their generation, and various modifications thereof can be made by a system designer. Accordingly, in an exemplary embodiment of the present disclosure, the interlocking method would not be specially limited.

Since the image display device 200, the communication network 210, and the plurality of voice recognition device 220 are not greatly different from the image display device 100, the communication network 110, and the voice recognition device 120, respectively, duplicate explanation thereof will be omitted.

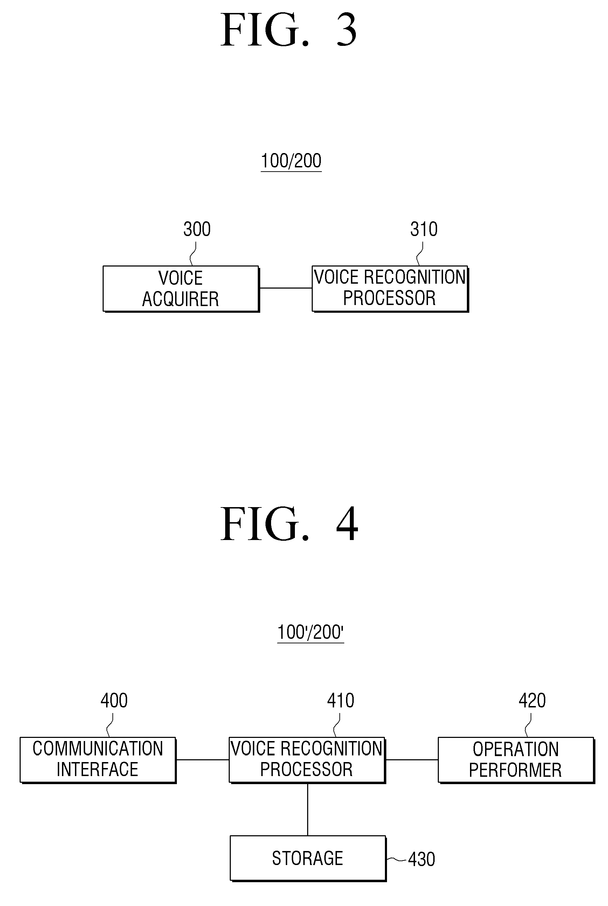

FIG. 3 is a block diagram exemplifying a detailed configuration of an image display device in FIGS. 1 and 2.

For convenience in explanation, referring to FIG. 3 together with FIG. 1, the image display device 100 according to an exemplary embodiment of the present disclosure includes a part or the whole of a voice acquirer 300 and a voice recognition processor 310.

Here, the term "includes a part or the whole" means that a constituent element such as the voice acquirer 300 may be omitted from the configuration of the image display device 100, or the voice acquirer 300 may be integrated to the voice recognition processor 310. To help sufficient understanding of the present disclosure, it is assumed that the system includes the whole of them.

The voice acquirer 300 may include a microphone that acquires voice utterance given by a user. This corresponds to a case where the microphone is embedded in the image display device 100. However, the microphone is an independent device, and it is also possible to connect the microphone out of the image display device 100. In this case, the microphone may be connected to the voice acquirer 300. Accordingly, the voice acquirer 300 may be a connector, and in this case, the voice acquirer 300 receives the voice utterance to acquire the voice utterance.

Further, the voice recognition processor 310 confirms rapid and accurate recognition result through parallel processing of the acquired or received voice utterance using the plurality of voice recognizers. Even in FIG. 3, as fully explained above, the image display device 100 is configured to operate in a stand-alone form. For example, the voice recognition processor 310 may derive the optimum recognition result for the voice utterance given by the user and may store the derived recognition result in an internal memory or registry. Here, the memory means a hardware configuration, and the registry means a software configuration.

The stored recognition result may be analyzed by a system designer thereafter and may be used to determine whether to replace the voice recognizer.

Further, if it is determined that the recognition result is finally derived, the voice recognition processor 310 may turn off the operation of the voice acquirer 300.

Except for such points, the voice recognition processor 310 has been fully explained through the image display device 100 or the voice recognition device 120 of FIG. 1, and thus further explanation thereof will be omitted. However, other added contents may be explained thereafter.

FIG. 4 is a block diagram exemplifying another detailed configuration of an image display device in FIGS. 1 and 2.

For convenience in explanation, referring to FIG. 4 together with FIG. 1, an image display device 100' according to another exemplary embodiment of the present disclosure includes a part or the whole of a communication interface 400, a voice recognition processor 410, an operation performer 420, and a storage 430.

Here, the term "includes a part or the whole" means that partial constituent elements, such as the communication interface 400 and/or the storage 430, may be omitted, or a partial constituent element such as the storage 430 may be integrated to another constituent element such as the voice recognition processor 410. To help sufficient understanding of the present disclosure, it is assumed that the system includes the whole of them.

According to the configuration of FIG. 4, the image display device 100' has voice recognizers embedded therein, and according to circumstances, the image display device 100' may be suitable to transmit the voice utterance to an external voice recognition device, for example, the voice recognition device 120 of FIG. 1, through the communication interface 400 and to receive the corresponding recognition result or the retrieval result.

In other words, the communication interface 400 may transfer user's voice utterance that is received, for example, through an external microphone to the voice recognition processor 410. In this case, the communication interface 400 may receive the voice utterance from the external microphone by wire or wirelessly.

Then, the voice recognition processor 410 may determine whether to process the received voice utterance by itself or to request the recognition result from the voice recognition device 120 of FIG. 1. For this, the voice recognition processor 410 first confirms the utterance length of the voice utterance. If the time period that is determined as a start and an end of the voice utterance is within a predetermined time range, the voice recognition processor 410 may process audio data of the voice utterance using the internal voice recognizers. In contrast, if the time period deviates from the predetermined time range, the voice recognition processor 410 may transmit the audio data of the voice utterance to the voice recognition device 120 through the communication interface 400.

Further, prior to transmission of the audio data of the voice utterance to the external voice recognition device 120, the voice recognition processor 410 may check the network state. If it is determined that the state of the communication network 110 of FIG. 1 is unstable and the load is severe, the voice recognition processor 410 may notify the user of the difficulty of the voice recognition through the operation performer 420. For this, the voice recognition processor 410 may output a message to the user through the operation performer 420, or may output voice to the user.

Further, if it is determined to internally process the voice utterance, the voice recognition processor 410 may check whether the internal processing has a burden, that is, a load of resources. If it is determined that the load is severe, the voice recognition processor 410 may transmit even the voice utterance that is within the predetermined time range to the external voice recognition device 120.

If it is determined that there is not big problem in internally processing the voice utterance, the voice recognition processor 410 analyzes the audio data of the received voice utterance through simultaneous operation of various voice recognizers that belong to different domains, and outputs the recognition result. In relation to this, sufficient explanation has been made as described above, and thus further explanation thereof will be omitted.

The operation performer 420 may include a tuner or a sound outputter and/or display. For example, if the voice utterance given by the user is "channel change", the voice recognition processor 410 may adjust the tuner. In contrast, if the voice utterance given by the user is related to "volume control", for example, if the user utters "volume up", the voice recognition processor 410 may raise the level of volume that is output to the sound outputter. For this, the voice recognition processor 410 may amplify the level of volume that is output from an amplifier. Further, if the user utters "Kim yon-ah" to desire the retrieval operation, the voice recognition processor 410 may execute "*-Voice" that is an internal fixed utterance engine, and may display execution of appl on a screen to notify the user of this.

As described above, since the operation performer 420 according to an exemplary embodiment of the present disclosure can perform various examples of operations, the operations of the operation performer 420 are not specially limited to the above-described contents.

It is preferable that the storage 430 corresponds to hardware resources, such as a ROM, a RAM, or a HDD (Hard Disk Drive). The storage 430 may temporarily store data that is processed in the voice recognition processor 410, and may store various pieces of information that are required for the voice recognition processor 410 to derive the optimum recognition result. As an example, the storage 430 may store various pieces of information, such as information related to a reference value, that is, threshold value, to be compared with the similarity score of the recognition result.

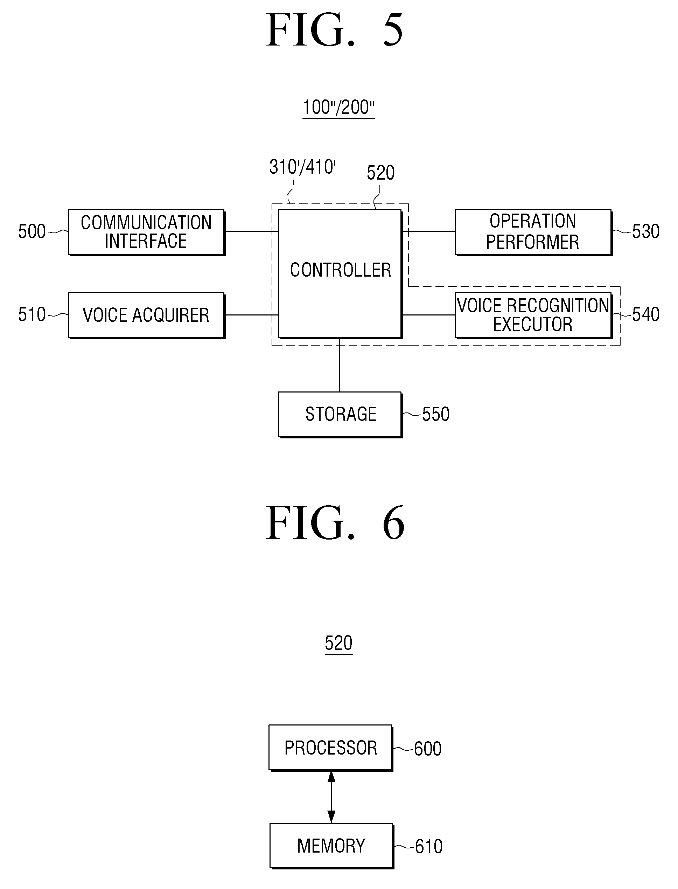

FIG. 5 is a block diagram exemplifying still another detailed configuration of an image display device in FIGS. 1 and 2, and FIG. 6 is a diagram exemplifying a configuration of a controller in FIG. 5.

For convenience in explanation, referring to FIG. 5 together with FIG. 1, an image display device 100" according to still another exemplary embodiment of the present disclosure includes a part or the whole of a communication interface 500, a voice acquirer 510, a controller 520, an operation performer 530, a voice recognition executor 540, and a storage 550. Here, the term "includes a part or the whole" has the same meaning as that as described above.

The configuration of FIG. 5 corresponds to a modification of the configuration of FIG. 4. Voice recognition processors 310' and 410' are different from those of FIG. 4 on the point that the voice acquirer 510 such as a microphone is embedded therein. However, as shown in FIG. 5, the voice recognition processors 310' and 410' have a further difference in that they can be divided into the controller 520 and the voice recognition executor 540 by hardware.

As exemplified in FIG. 6, the controller 520 may include a processor 600 and a memory 610. Accordingly, the controller 520 may have different operations depending on whether to include the memory 610 as shown in FIG. 6.

For example, if voice utterance given by a user is received, the controller 520 executes the voice recognition executor 540 and then transfers the voice utterance. Then, the voice recognition executor 540 derives the optimum recognition result for the received voice utterance and provides the derived recognition result to the controller 520 through parallel processing of the received voice utterance using a plurality of voice recognizers. Then, the controller 520 performs various operations on the basis of the corresponding recognition result. In this point, the voice recognition executor 540 is not greatly different from the voice recognition processor 410 of FIG. 4, but there is a difference between them on the point that the voice recognition processor 410 can further perform a control function by software.

If the controller 520 has the configuration of FIG. 6, the image display device 100" loads and stores a voice recognizer (engine) related program that is stored in the voice recognition executor 540 during an initial driving of the system in the memory 610 of Fig. 6. Further, if the voice utterance is received, the processor 600 derives the optimum recognition result through execution of the program stored in the memory 610, that is, parallel processing of the plurality of voice recognizers. In this operation, data processing becomes high to that extent in comparison to the above-described case.

Except for such points, the communication interface 500, the controller 520, the operation performer 530, the voice recognition executor 540, and the storage 550 of FIG. 5 are not greatly different from the communication interface 400, the voice recognition processor 410, the operation performer 420, and the storage 430 of FIG. 4, and thus duplicate explanation thereof will be omitted.

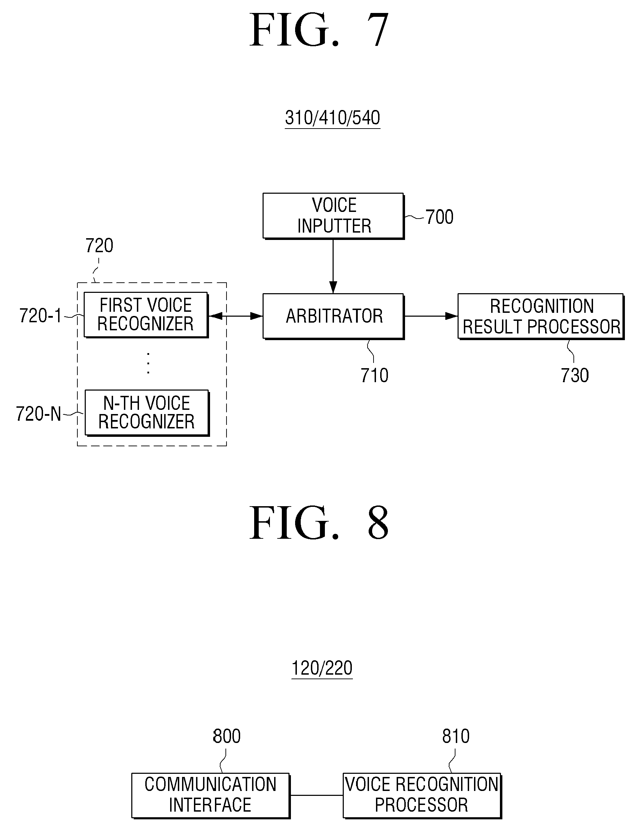

FIG. 7 is a block diagram exemplifying a detailed configuration of a voice recognition processor and a voice recognition executor in FIGS. 3 to 5.

For convenience in explanation, referring to FIG. 7 together with FIG. 5, a voice recognition executor 540 may include a part or the whole of a voice inputter (module) 700, an arbitrator (module) 710, a plurality of voice recognizers 720, and a recognition result processor (module) 730.

Here, the term "includes a part or the whole" means that a constituent element such as the voice inputter 700 or the recognition result processor 730 may be omitted or may be integrated to another constituent element such as the arbitrator 710. To help sufficient understanding of the present disclosure, it is assumed that the system includes the whole of them.

Further, according to an exemplary embodiment of the present disclosure, the term "inputter" or "processor" means hardware, and the term "module" means software. However, software may be configured by hardware without limit (e.g., memory and registry), and the terms are not specially limited to hardware or software.

The voice inputter 700 serves to give the voice utterance given by the user to a voice recognition engine (or system). In other words, the voice inputter 700 may perform interface operation between the controller 520 and the voice recognition executor 540 including the voice recognition engine.

The arbitrator 710 may confirm the utterance length of the first received voice utterance. If the utterance length exceeds a predetermined time range, the arbitrator 710 may notify the controller 520 of this through the recognition result processor 730. Since the confirmation of the utterance length may be selectively executed in accordance with a system designer, it may not specially limited thereto. Further, such an operation may be performed even in the controller 520. For example, if the operation is performed in the controller 520, the controller 520 may execute the voice recognition executor 540 in accordance with the result.

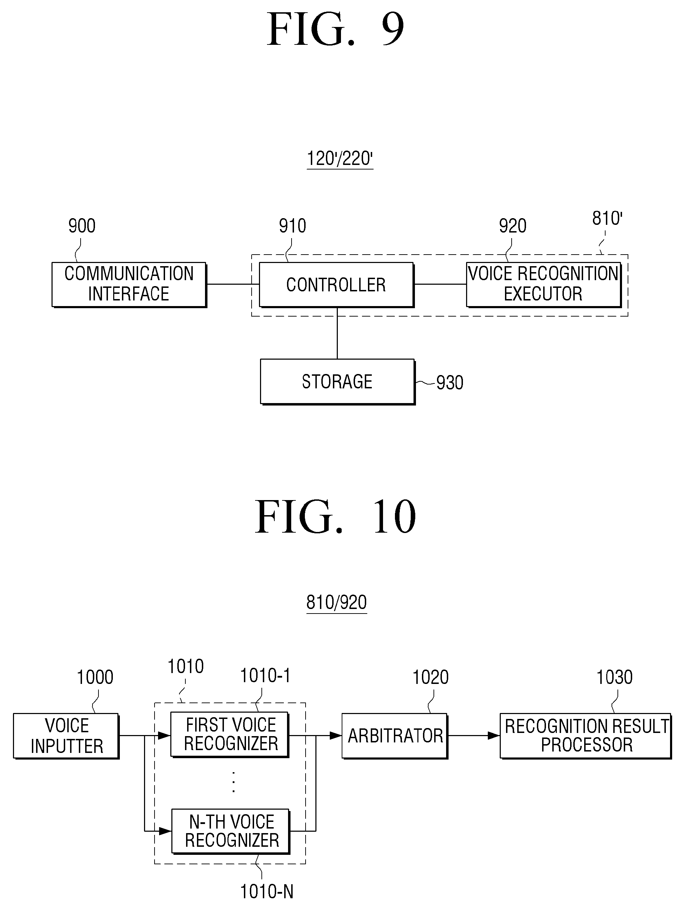

As seen from this point, it is preferable that the voice recognition executor 540 according to an exemplary embodiment of the present disclosure has a configuration as illustrated in FIG. 10, and the detailed explanation thereof will be sufficiently made later with reference to FIG. 10.

However, in the case where the voice recognition executor 540 should confirm the utterance length, it is preferable that the voice recognition executor 540 is modified to have the configuration as illustrated in FIG. 7.

From this viewpoint, for example, if the arbitrator 710 determines to process the received voice utterance by itself, it may simultaneously input the received voice utterance to a plurality of voice recognizers 720. In this case, strictly speaking, this case may not accurately coincide with the "parallel processing" as described above. However, there would be a clear difference between this processing and the typical "distribution processing" on the point that the plurality of voice recognizers are connected to one arbitrator 710 to simultaneously receive the voice utterances. For example, the "distribution processing" corresponds to the controller and the operation of the controller.

The arbitrator 710 determines of which voice recognizer the recognition result, that is, a recognition text, is to be used as the optimum recognition result that coincides with the voice utterance given by the user using the recognition text, similarity scores, and response time as the recognition results output from the plurality of voice recognizers 720. In other words, the arbitrator 710 preferentially confirms the similarity score with respect to the recognition result having a high response speed, and if the similarity score is unable to reach the reference, the arbitrator 710 finds the optimum recognition result through confirming of the similarity score of the recognition result that shows the next-order response speed.

Although the plurality of voice recognizers 720 have common purposes on the point that they analyze audio data for voice recognition, that is, audio data of the input voice utterance, to convert the audio data into text, and output the recognition result for a recognition score such as similarity, the respective voice recognizers 720-1 to 720-n perform voice recognition of different domains. For example, a certain voice recognizer gives the recognition result that is required to control hardware resources, such as channel or volume control of the image display device 100, whereas another voice recognizer gives the recognition result through processing of a voice command related to execution or retrieval of appl.

In this point, even if user's voice command is simultaneously input to the plurality of voice recognizers 720, the response speeds for outputting the recognition results may differ from each other. However, in an exemplary embodiment of the present disclosure, since it is not essentially determined that the recognition result obtained most earliest is the most accurate recognition result, the recognition result having a similarity score that is higher than a reference threshold value, more accurately, a recognition text, is derived within a response time to the extent that the user does not have a rejection feeling, and thus accuracy can be further heightened.

The recognition result processor 730 may receive the optimum recognition result that is provided from the arbitrator 710 and may provide the received optimum recognition result to the controller 520 of FIG. 5.

Again, in summary, the voice utterance given by the user is input to a sound collection device such as a microphone that is connected to the image display device 100 by wire or wirelessly, and is input to one or more voice recognizers of the voice recognition device 120 through the image display device 100 or a network. The voice recognizer outputs the recognition result on the basis of the input audio data. The voice recognizer outputs the confidence levels for the recognition results in the form of specific scores through a series of processes as described above. Table 1 exemplarily presents output of the recognition results, and the voice recognizer may output the recognition text and the similarity scores as in Table 1 as the recognition results. In this case, the respective recognition result may have different recognition domains.

**[Table 1]**

| No. | Result Text | Confidence Score | Domain |
|---|---|---|---|
| 1 | Volume up | 5300 | Control Command |
| 2 | Volume down | 4200 | Control Command |
| 3 | Face book | 3200 | Application |

As described above, the time for several voice recognizers to perform recognition process, that is, the response time, may differ. In an exemplary embodiment of the present disclosure, selection of the recognition result of the voice recognizer can be determined in further consideration of the recognition text, similarity score, response time, and utterance length.

FIG. 8 is a block diagram exemplifying a detailed configuration of the voice recognition device illustrated in FIGS. 1 and 2.

For convenience in explanation, referring to FIG. 8 together with FIG. 1, the voice recognition device 120 according to an exemplary embodiment of the present disclosure includes a communication interface 800 and a voice recognition processor 810.

The communication interface 800 performs communication with the image display device 100 under the control of the voice recognition processor 810. In this process, the communication interface 800 receives user's voice utterance that is provided from the image display device 100, and transfers the received voice utterance to the voice recognition processor 810. Further, the communication interface 800 receives the optimum recognition result for the voice utterance from the voice recognition processor 810, and transmits the received optimum recognition result to the image display device 100.

Since the voice recognition processor 810 has been fully explained through the voice recognition processors 310 and 410 and the voice recognition executor 540 of the image display device 100 as illustrated in FIGS. 3 to 5, further explanation thereof will be omitted.

FIG. 9 is a block diagram exemplifying another detailed configuration of the voice recognition device illustrated in FIGS. 1 and 2.

For convenience in explanation, referring to FIG. 9 together with FIG. 1, a voice recognition device 120' according to another exemplary embodiment of the present disclosure includes a part or the whole of a communication interface 900, a controller 910, a voice recognition executor 920, and a storage 930. Here, the term "includes a part or the whole" has the same meaning as that as described above.

In comparing the voice recognition device 120' of FIG. 9 with the voice recognition device 120 of FIG. 8, a voice recognition processor 810' of the voice recognition device 120' illustrated in FIG. 9 may be separated into the controller 910 and the voice recognition executor 920, and in this case, the controller 910 may include the processor 600 and the memory 610 as illustrated in FIG. 6. Since the voice recognition processor 810 has been fully explained with the explanation of the configuration of the image display devices 100, 100', and 100" in FIGS. 3 to 6, further explanation thereof will be omitted.

FIG. 10 is a block diagram exemplifying a detailed configuration of a voice recognition processor and a voice recognition executor in FIGS. 8 and 9.

For convenience in explanation, referring to FIG. 10 together with FIG. 9, a voice recognition executor 920 may include a part or the whole of a voice inputter (module) 1000, a plurality of voice recognizers 1010, an arbitrator (module) 1020, and a recognition result processor (module) 1030. Here, the term "includes a part or the whole" has the same meaning as that as described above.

The voice inputter 1000 provides audio data of received voice utterance to the plurality of voice recognizers 1010 respectively and simultaneously. The voice inputter 1000 becomes an input side for the plurality of voice recognizers 1010.

The plurality of voice recognizers 1010 provide respective recognition results for the received voice utterance to the arbitrator 1020. Since the plurality of voice recognizers 1010 have been fully explained with reference to FIG. 7, further explanation thereof will be omitted.

Further, the arbitrator 1020 derives the optimum recognition result for the voice utterance given by the user from the recognition results provided from the plurality of voice recognizers 1010. Since the arbitrator 1020 has been fully explained, further explanation thereof will be omitted. However, the arbitrator 1020 becomes output side of the plurality of voice recognizers 1010.

FIG. 10 illustrates a configuration according to an exemplary embodiment of the present disclosure. In other words, this configuration may coincide with the meaning of the "parallel processing" as described in an exemplary embodiment of the present disclosure. Referring to FIG. 10, as seen from the input side of the plurality of voice recognizers 1010, that is, as seen from the output side of the voice inputter 1000 that is on the basis of the arbitrator 1020, respective voice recognizers 1010-1 to 1010-N are connected in parallel to each other. It can be confirmed that the input sides thereof are commonly connected, and the output sides thereof are commonly connected.

Except for such points, the voice inputter (module) 1000, the plurality of voice recognizers 1010, the arbitrator (module) 1020, and the recognition result processor (module) 1030 in FIG. 10 are not greatly different from the voice inputter (module) 700, the plurality of voice recognizers 720, the arbitrator (module) 710, and the recognition result processor (module) 730 in FIG. 7, and thus duplicate explanation thereof will be omitted.

On the other hand, as described above, in the case of performing voice recognition using a plurality of voice recognizers embedded in the image display device 100 of FIG. 1 without confirming the utterance length of voice utterance given by the user, the image display device 100 may have the configuration as illustrated in FIG. 10. Accordingly, in an exemplary embodiment of the present disclosure, the configuration of FIG. 10 is not specially limited to the voice recognition device 120, but may also be applied to the image display device 100 of FIG. 1.

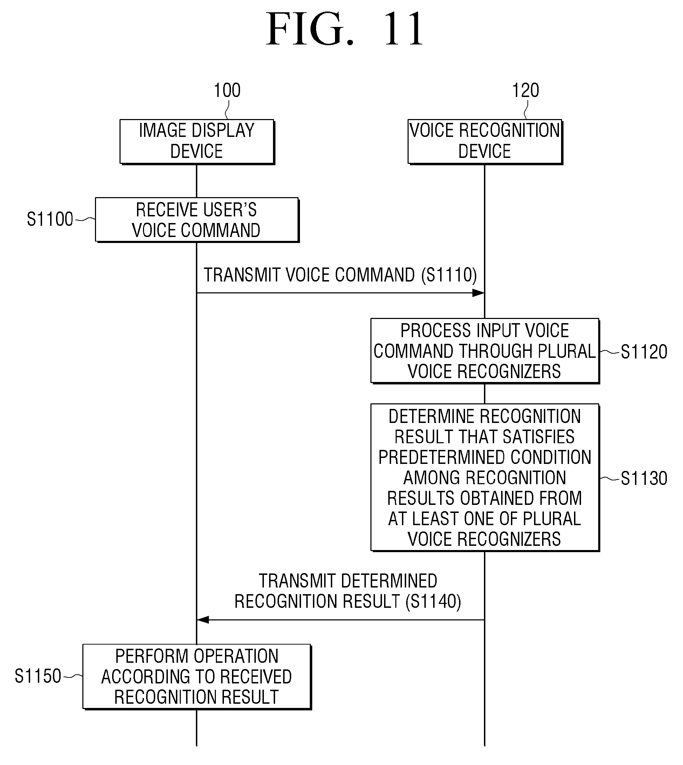

FIG. 11 is a diagram exemplifying a voice recognition process in the system of FIG. 1.

As illustrated in FIG. 11, the image display device 100 receives voice utterance given by a user (S1100). For this, a microphone that is provided in the image display device 100 may be used, and it is also possible to receive the voice utterance from an external microphone, that is, a sound collection device, connected to the image display device 100.

Then, the image display device 100 transmits the received voice utterance to the voice recognition device 120 (S1110). Referring to FIG. 11, no voice recognizer may be provided in the image display device 100, it is preferable to perform the step S1110.

On the other hand, if the voice utterance is received, the voice recognition device 120 confirms the optimum recognition result if the recognition result that is obtained by performing parallel processing through the plurality of voice recognizers satisfies a predetermined condition (S1120 and S1130). This has been fully described.

Thereafter, the voice recognition device 120 provides the optimum recognition result to the image display device 100 (S1140).

Then, the image display device 100 performs an operation in accordance with the received recognition result (S1150). Here, the term "performs an operation in accordance with the recognition result" means an operation, such as volume control, channel change, or appl execution.

More specifically, the image display device 100 receives, for example, a recognition text, from the voice recognition device 120 as the recognition result. Accordingly, the image display device 100 may retrieve where there is a text that coincides with the received recognition text, that is, predetermined operation information. If a coincident text is retrieved, the image display device 100 operates the image display device 100 on the basis of binary information that matches the retrieved text. Here, the binary information corresponds to a mechanical word that can be recognized by the image display device 100.

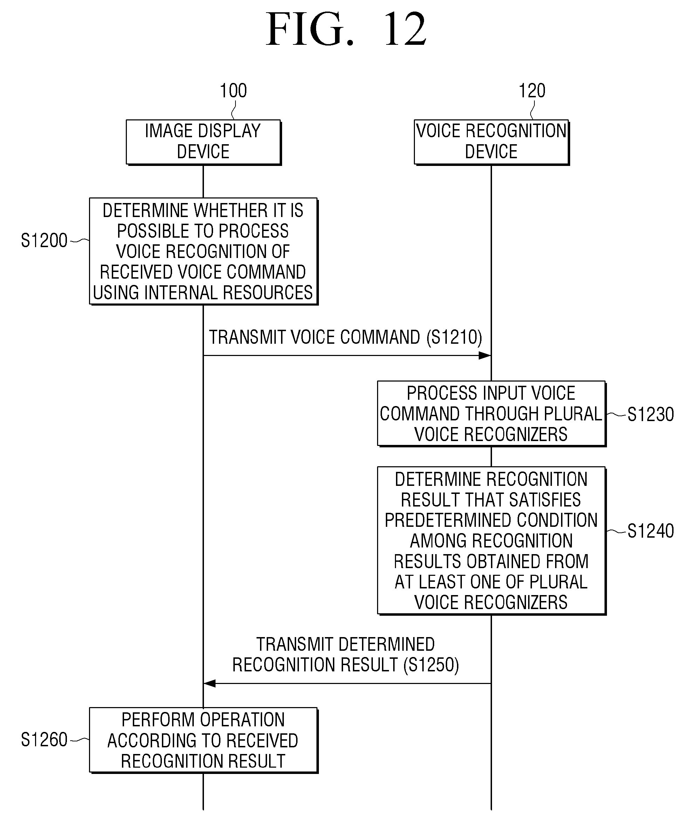

FIG. 12 is a diagram exemplifying another voice recognition process in the system of FIG. 1.

As illustrated in FIG. 12, if the image display device 100 includes voice recognizers provided therein to perform voice recognition operation, the image display device 100 may first determine which element will process the received voice utterance (S1200). Such determination operation can be performed through the voice recognition engine, but is not limited thereto. Since such determination operation can be performed in various manners, such as through a separate program, the element that can perform such determination operation is not specially limited to the voice recognition engine.

The image display device 100 can first confirm the utterance length of the voice recognition. For example, if it is confirmed that the utterance length of the received voice utterance is three seconds although a predetermined time length is one second, the image display device 100 may transmit the received voice utterance to the voice recognition device 120 (S1210).

In this process, if a load occurs in the internal resources although the utterance length does not exceed one second, the image display device 100 may transmit the received voice utterance to the voice recognition device 120.

Further, if the image display device 100 determines that the network state is unstable at a time when it intends to transmit the received voice utterance to the voice recognition device 120, it may notify the user that it is not easy to perform the corresponding process.

Except for such points, the steps S1230 to S1260 of FIG. 12 are not greatly different from the steps S1120 to S1150 of FIG. 11, and thus the detailed explanation thereof will be omitted.

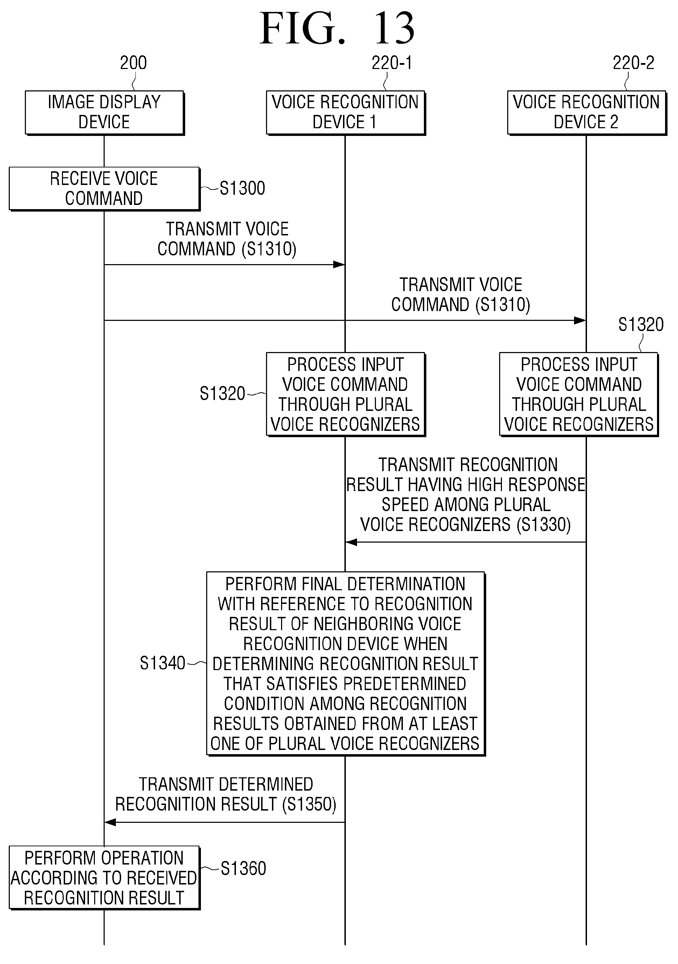

FIG. 13 is a diagram exemplifying a voice recognition process in the system of FIG. 2.

Referring to FIG. 13, it is assumed that received voice utterance is transmitted to the plurality of voice recognition devices 220-1 and 220-2 regardless of whether the image display device 200 has a voice recognition engine embedded therein.

The image display device 200 may transmit the received voice utterance simultaneously to the plurality of voice recognition devices 220-1 and 220-2 (S1310). It is preferable that the voice recognition device 220-1 operates as a main device according to an exemplary embodiment of the present disclosure. Here, the main device may be defined as a device that receives the optimum recognition result for the voice utterance that is transmitted by the image display device 200.

Based on this, voice recognition device 1 220-1 of FIG. 13 may perform steps S1120 to S1150 of FIG. 11. However, if a plurality of recognition results that correspond to a candidate group exist, the voice recognition device 1 220-1 of FIG. 13 may derive the optimum recognition result with reference to the recognition result that is provided from voice recognition device 2 220-2. For example, one voice recognizer may give a plurality of recognition results, and similarity scores of such recognition results may be similar to each other. Accordingly, if it is determined that the similarity scores are similar to each other and it is difficult to derive the optimum recognition result, the voice recognition device 1 220-1 can make the final determination with reference to the recognition results provided from the voice recognition device 2 220-2.

Except for such points, the operation process of FIG. 13 is not greatly different from the operation process of FIG. 11, and thus the detailed explanation thereof will be omitted.

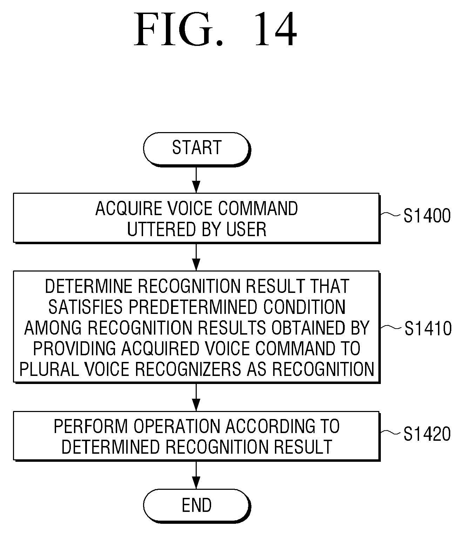

FIG. 14 is a flowchart illustrating a process of driving an image display device according to an exemplary embodiment of the present disclosure.

For convenience in explanation, referring to FIG. 14 together with FIG. 1, the image display device 100 according to an exemplary embodiment of the present disclosure acquires voice utterance given by a user (S1400).

Then, the image display device 100 provides the acquired voice utterance to a plurality of voice recognizers, and determines and confirms the recognition result that satisfies a predetermined condition among the recognition results obtained through parallel processing as the acquired recognition result of the voice utterance (S1410).

This corresponds to a case where the image display device 100 determines to perform voice recognition using an internal voice recognition engine in consideration of several situations.

Then, the image display device 100 performs an operation according to the determined recognition result (S1420). For this, the image display device 100 may perform operations, such as channel change, volume control, retrieval, and appl execution.

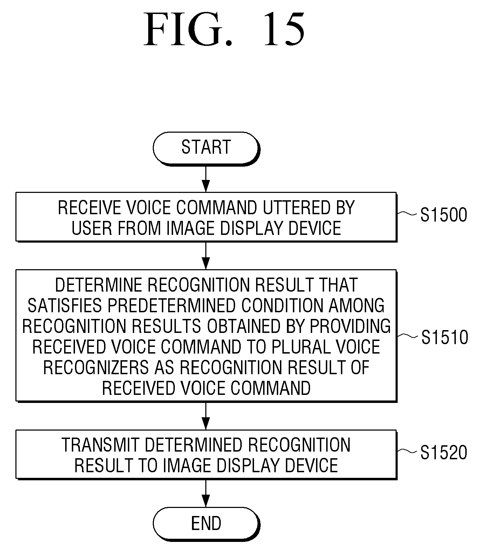

FIG. 15 is a flowchart illustrating a process of driving a voice recognition device according to a first exemplary embodiment of the present disclosure.

For convenience in explanation, referring to FIG. 15 together with FIG. 1, the voice recognition device 120 according to an exemplary embodiment of the present disclosure receives voice utterance given by a user from the image display device 100 (S1500).

Then, the voice recognition device 120 confirms the recognition result that satisfies a predetermined condition among the recognition results obtained through parallel processing of the received voice utterance through a plurality of voice recognizers as the received recognition result of the voice utterance (S1510).

Then, the voice recognition device 120 transmits the finally determined, that is, confirmed, recognition result to the image display device 100 (S1520). In this process, if it is required for the voice recognition device 120 to provide the retrieval result that matches the recognition result, the voice recognition device 120 may provide the retrieval result. For example, if a user utters the name of a sport star, the voice recognition device 120 may primarily obtain the recognition result of the sport star, and may finally provide the retrieval result through performing of the retrieval on the basis of the recognition result. As the retrieval result, various pieces of information, such as the star's home town and the college that the star graduated from may be included.

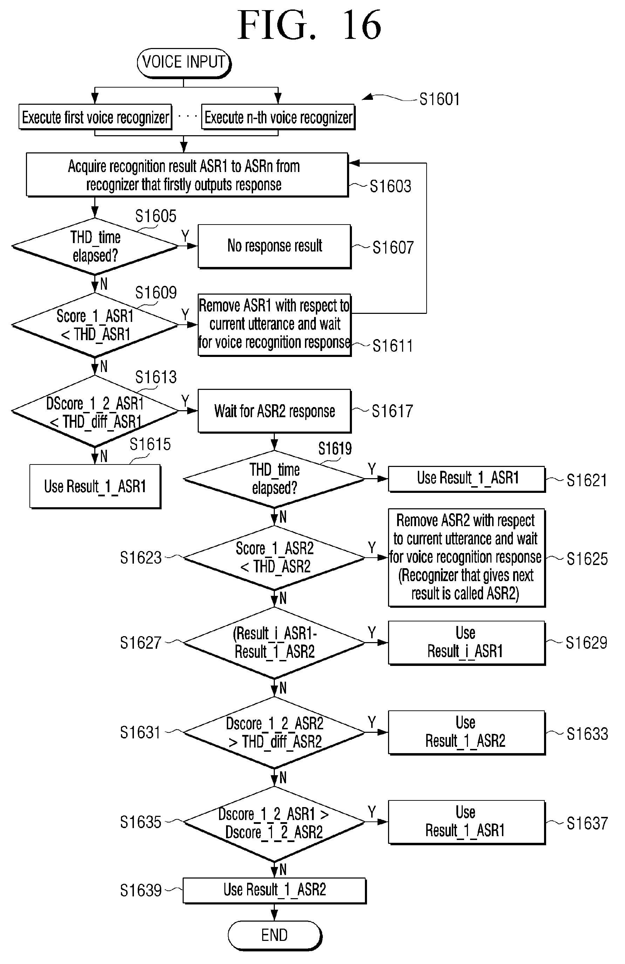

FIG. 16 is a flowchart illustrating a process of driving a voice recognition device according to a second exemplary embodiment of the present disclosure.

Prior to the detailed explanation, description will be briefly described. If it is assumed that first to n-th recognizers give recognition results in order, Result_1_ASR1 denotes a first-order candidate result of the first recognizer, and Result_1_ASR2 denotes a first-order candidate result of the second recognizer. Score_1_ASR1 denotes a recognition score (or similarity score) of Result_1_ASR1, and Resuit_i_ASR1 denotes the i-th order recognition result among several recognition result candidates having scores that are higher than a threshold value THD_AWR1 of the first recognizer. DScore_1_2_ASR1 denotes a score difference between the first-order result candidate and the second-order result candidate of the first recognizer, and DScore_1_2_ASR2 denotes a score difference between the first-order result candidate and the second-order candidate result of the second recognizer. THD_ASR1 denotes a threshold value of scores for determining whether the first recognizer performs recognition, and THD_ASR2 denotes a threshold value of scores for determining whether the second recognizer performs recognition. THD_diff_ASR1 denotes a threshold value for a difference between recognition result scores of the first recognizer, and THD_diff_ASR2 denotes a threshold value for a difference between recognition result scores of the second recognizer. Further, THD_time denotes the maximum time for waiting for the voice recognition result. That is, THD_time is a threshold value that indicates a predetermined time range.

For convenience in explanation, referring to FIG. 16 together with FIG. 1, the voice recognition device 120 according to an exemplary embodiment of the present disclosure simultaneously operates the first to n-th recognizers if voice utterance is input (S1601).

If it is assumed that the recognition results of the recognizers that output earliest responses among several recognizers are ASR1 to ASRn, the voice recognition device 120 acquires the recognition results in the order of earlier response speeds (S1603).

In this process, the voice recognition device 120 determines whether any responded recognition result exists in the predetermined time range THD_time (S1605), and if there is not determination result, the voice recognition device 120 notifies the user that there is not the response result (S1607).

The voice recognition device compares the score, that is, the similarity score, of the first-order candidate that is an initial recognition result ASR1 with the reference threshold value THD_ASR1 (S1609). In this case, there may be a plurality of reference threshold values. In other words, if the score exceeds the highest reference value, the voice recognition device may directly reflect it in the recognition result, whereas the voice recognition device may not reflect the lowest reference value in the recognition result without reserve. Further, an intermediate-level reference value may be necessary to further consider whether to reflect the intermediate-level reference value in the recognition result.

In this point, if the score is smaller than the reference threshold value, for example, the highest reference value, as the result of comparison, the voice recognition device 120 discards the corresponding recognition result, and waits for other recognition results within a given time range (S1611).

In this process, if the received recognition result exceeds the reference threshold value and a plurality of recognition results DScore 1 and 2_ASR 1 that are similar to the similar score are retrieved, the voice recognition device 120 compares the difference THD_diff_ASR1 in similarity score between two recognition results (S1613). Here, ASR 1 means the first recognizer, and thus it can be understood that the plurality of recognition results are output from the first recognizer.

If the similarity score difference is great, the voice recognition device 120 uses the recognition result having a high similarity score as the optimum recognition result (S1615).

If the similarity scores are similar to each other and it is difficult to make a final determination, the voice recognition device 120 may confirm the optimum recognition result with reference to the recognition result of the recognizer that is received in the next order (S1617 to S1639).

More specifically, the voice recognition device 120 waits for the recognition result ASR2 of the second voice recognizer (S1617).

If the waiting time is equal to or longer than the total waiting time, the voice recognition device uses the initial recognition result Result_1_ASR1 to be ended (S1619 and S1621).

Further, if the first-order candidate score of the recognition result ASR2 of the second voice recognizer is smaller than the reference threshold value THD_ASR2, the voice recognition device excludes the recognition result ASR2 of the second voice recognizer with respect to the current voice, and determines the recognizer that sends the next recognition result as the recognition result ASR2 of the second voice recognizer to return to the step S1617.

If the first-order candidate score of the recognition result ASR2 of the second voice recognizer is equal to or larger than the reference threshold value THD_ASR2 (S1623), and the recognition result Resuit_i_ASR1 of the first voice recognizer is equal to the recognition result Result_1_ASR2 of the second voice recognizer, the voice recognition device uses the recognition result Resuit_i_ASR1 of the first voice recognizer to be ended (S1627 and S1629).

If the first-order candidate score of the recognition result ASR2 of the second voice recognizer is equal to or larger than the reference threshold value THD_ASR2, but the recognition result Resuit_i_ASR1 of the first voice recognizer is not equal to the recognition result Result_1_ASR2 of the second voice recognizer, the voice recognition device compares the similarity score DScore1_2_ASR2 of the plural recognition results with the similarity score difference THD_diff_ASR2, and if the similarity score DScore1_2_ASR2 is equal to or larger than the similarity score difference THD_dff_ASR2, the voice recognition device uses the recognition result Result1_ASR2 of the second voice recognizer to be ended (S1631 and S1633).

If the first-order candidate score of the recognition result ASR2 of the second voice recognizer is equal to or larger than the reference threshold value THD_ASR2, but the candidate recognition result Resuit_i_ASR1 of the first voice recognizer is not equal to the candidate recognition result Result_1_ASR2 of the second voice recognizer, and the similarity score difference DScore1_2_ASR2 is smaller than the threshold value THD_diff_ASR2, the voice recognition device compares the similarity score difference DScore1_2_ASR2 of the plural recognition results with the similarity score difference THD_diff_ASR2, and if the similarity score DScore1_2_ASR2 is equal to or larger than the similarity score difference THD_diff_ASR2, the voice recognition device uses the recognition result Result1_ASR2 of the second voice recognizer to be ended (S1631 to S1639).

Again, in summary, when the voice recognition device 120 receives a plurality of recognition results from the recognizer having the earliest response, the similarity scores between them may be similar to each other, and the score difference may be smaller than the threshold value (S1613).

In this case, the voice recognition device waits for the recognition result that is output from the next recognizer within the given time range (S1617 to S1619).

In this case, the recognition result that is given by the next recognizer within the given time range should be larger than the reference threshold value (S1623), so that they can be compared with each other.

As the result of comparison, the recognition results may not coincide with each other (S1627).

In this case, the voice recognition device 120 determines whether the similarity score difference between the plurality of recognition results that are obtained in the next order is larger than the predetermined threshold value (S1631).

If the similarity score difference is not larger than the predetermined threshold value as the result of comparison, the voice recognition device 120 may determine the optimum recognition result through determining which of the recognition result having a high similarity score among the first-order recognition results and the recognition result having a high similarity score among the low-order recognition results has a high similarity score (S1635 to S1639).

As described above, explanation has been made using the recognition results of the recognizer that gives the initial recognition result and the recognizer that gives the recognition result in the next order within the given time range. Accordingly, so far as the recognition results are included within the time range, the voice recognition device 120 may wait for the recognition result ASR3 of the third voice recognizer (S1631).

Accordingly, in an exemplary embodiment of the present disclosure, utilization of the recognition results that are provided to two recognizers is not specially limited.

On the other hand, even if it is described that all constituent elements that constitute an exemplary embodiment of the present disclosure are coupled into one to perform operation, the present disclosure is not essentially limited to such an exemplary embodiment. That is, within the purpose range of the present disclosure, all the constituent elements may be selectively coupled into one or more to perform operation. Further, although each of the constituent elements may be implemented by independent hardware (e.g., a hardware processor), a part or the whole of the constituent elements may be selectively combined and implemented as a computer program having a program module that performs functions of a part or the whole of one or a plurality of combined hardware configurations. Codes and code segments that constitute the computer program may be easily reasoned by those skilled in the art to which the present disclosure pertains. Such a computer program may be stored in a non-transitory computer readable medium to be read and executed by the computer to implement an exemplary embodiment of the present disclosure.

Here, the non-transitory computer readable medium is not a medium that stores data for a short period, such as a register, a cache, or a memory, but means a medium which semi-permanently stores data and is readable by a device. Specifically, various applications and programs as described above may be stored and provided in the non-transitory computer readable medium, such as, a CD, a DVD, a hard disc, a Blu-ray disc, a USB, a memory card, and a ROM.

The foregoing exemplary embodiments and advantages are merely exemplary and are not to be construed as limiting the present disclosure. The present teaching can be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. A voice recognition device comprising:
a communication interface configured to receive, from an electronic device, a voice signal for voice utterance given by a user; and
a voice recognition processor configured to determine, as a recognition result of the received voice signal, the recognition result that satisfies a predetermined condition among recognition results that are obtained by performing parallel processing of the received voice signal through a plurality of voice recognizers and to control the communication interface to transmit the determined recognition result to the electronic device.

2. The voice recognition device as claimed in claim 1, wherein the voice recognition processor determines whether to satisfy the predetermined condition by using a response speed for outputting the recognition result and similarity indicating confidence of the recognition result.

3. The voice recognition device as claimed in claim 2, wherein the voice recognition processor provides the recognition result which the similarity is larger than a predetermined threshold value among the recognition results having a high response speed, to the electronic device.

4. The voice recognition device as claimed in claim 3, wherein if there are a plurality of recognition results having the similarity that is smaller than the predetermined threshold value among prior order recognition results having the high response speed, the voice recognition processor confirms the recognition result to be provided to the electronic device with reference to the recognition result that is provided in a next order within a predetermined time range.

5. The voice recognition device as claimed in claim 4, wherein the voice recognition processor selects a prior order recognition result that coincides with the next-order recognition result and provides the selected prior order recognition result to the electronic device.

6. The voice recognition device as claimed in claim 2, wherein if there is no recognition result that is obtained from the plurality of voice recognizers within a predetermined time range, the voice recognition processor notifies the electronic device that there is no recognition result.

7. The voice recognition device as claimed in claim 1, wherein the voice recognition processor performs the parallel processing by processing the received voice signal through a first voice recognizer among the plurality of voice recognizers and processing the received voice signal through a second voice recognizer among the plurality of voice recognizers.

8. A method for driving a voice recognition device, comprising:
receiving, from an electronic device, a voice signal for voice utterance given by a user;
determining, as a recognition result of the received voice signal, the recognition result that satisfies a predetermined condition among recognition results that are obtained by performing parallel processing of the received voice signal through a plurality of voice recognizers; and
providing the determined recognition result to the electronic device.

9. The method as claimed in claim 8, wherein the determining the recognition result comprises determining whether to satisfy the predetermined condition by using a response speed for outputting the recognition result and similarity indicating confidence of the recognition result.

10. The method as claimed in claim 9, wherein the providing the determined recognition result to the electronic device comprises providing the recognition result, which the similarity is larger than a predetermined threshold value among the recognition results having a high response speed, to the electronic device.

11. The method as claimed in claim 10, wherein the determining the recognition result comprises confirming the recognition result to be provided to the electronic device with reference to the recognition result that is provided in a next order within a predetermined time range if there are a plurality of recognition results having the similarity that is smaller than the predetermined threshold value among prior order recognition results having the high response speed.

12. The method as claimed in claim 11, wherein the providing the determined recognition result to the electronic device comprises selecting a prior order recognition result that coincides with the next-order recognition result and providing the selected prior order recognition result to the electronic device.

13. The method as claimed in claim 9, further comprising notifying the electronic device that there is not recognition result if there is no recognition result that is obtained from the plurality of voice recognizers within a predetermined time range.

14. The method as claimed in claim 8, wherein the performing parallel processing processes the received voice signal through a first voice recognizer among the plurality of voice recognizers and processes the received voice signal through a second voice recognizer among the plurality of voice recognizers.

## Amended claims

### Amended claims in accordance with Rule 137(2) EPC.

1. A voice recognition device (120, 220) comprising:
a communication interface (800, 900) configured to receive, from an electronic device (100, 200, 100"), a voice signal for voice utterance given by a user; and
a voice recognition processor (810, 810') configured to determine, as a recognition result of the received voice signal, the recognition result that satisfies a predetermined condition among recognition results that are obtained by performing parallel processing of the received voice signal through a plurality of voice recognizers and to control the communication interface to transmit the determined recognition result to the electronic device;
wherein the voice recognition processor (810, 810') determines whether to satisfy the predetermined condition by using the recognition results that are within a predetermined time range and similarity scores indicating confidence of the recognition results and
wherein the plurality of voice recognizers each give a plurality of recognition results;
**characterized in that** each recognizer gives their recognition results in order and
wherein the voice recognition processor (810, 810') determines whether to satisfy the predetermined condition by using the difference in similarity score between the first and second order recognition results from the recognizer having the earliest response.

2. The voice recognition device as claimed in claim 1, wherein the voice recognition processor (810, 810') provides the first order recognition result from the recognizer having the earliest response if the similarity score is larger than a predetermined threshold value, to the electronic device.

3. The voice recognition device as claimed in claim 2, wherein if there are a plurality of recognition results having a similarity score that is smaller than the predetermined threshold value among recognition results from the recognizer having the earliest response, the voice recognition processor (810, 810') confirms the recognition result to be provided to the electronic device with reference to the recognition result that is provided from the next recognizer within the predetermined time range.

4. The voice recognition device as claimed in claim 3, wherein the voice recognition processor (810, 810') selects a recognition result from the recognizer having the earliest response that coincides with a recognition result from the next recognizer and provides the selected recognition result to the electronic device (100, 200, 100").

5. The voice recognition device as claimed in claim 1, wherein if there is no recognition result that is obtained from the plurality of voice recognizers within the predetermined time range, the voice recognition processor (810, 810') notifies the electronic device (100, 200, 100") that there is no recognition result.

6. The voice recognition device as claimed in claim 1, wherein the voice recognition processor (810, 810') performs the parallel processing by processing the received voice signal through a first voice recognizer among the plurality of voice recognizers and processing the received voice signal through a second voice recognizer among the plurality of voice recognizers.

7. A method for driving a voice recognition device (120, 220), comprising:
receiving, from an electronic device (100, 200, 100"), a voice signal for voice utterance given by a user;
determining, as a recognition result of the received voice signal, the recognition result that satisfies a predetermined condition among recognition results that are obtained by performing parallel processing of the received voice signal through a plurality of voice recognizers; and
providing the determined recognition result to the electronic device
wherein the determining the recognition result comprises determining whether to satisfy the predetermined condition by using the recognition results that are within a predetermined time range and similarity scores indicating confidence of the recognition result and
wherein the plurality of voice recognizers each give a plurality of recognition results;
**characterized in that** each recognizer gives their recognition results in order and
wherein the determining the recognition result comprises determining whether to satisfy the predetermined condition by using the difference in similarity score between the first and second order recognition results from the recognizer having the earliest response.

8. The method as claimed in claim 7, wherein the providing the determined recognition result to the electronic device (100, 200, 100") comprises providing the first order recognition result from the recognizer having the earliest response if the similarity score is larger than a predetermined threshold value, to the electronic device.

9. The method as claimed in claim 8, wherein the determining the recognition result comprises confirming the recognition result to be provided to the electronic device with reference to the recognition result that is provided from the next recognizer within the predetermined time range if there are a plurality of recognition results having a similarity score that is smaller than the predetermined threshold value among recognition results from the recognizer having the earliest response.

10. The method as claimed in claim 9, wherein the providing the determined recognition result to the electronic device (100, 200, 100") comprises selecting a recognition result from the recognizer having the earliest response that coincides with a next-order recognition result from the next recognizer and providing the selected recognition result to the electronic device.

11. The method as claimed in claim 7, further comprising notifying the electronic device (100, 200, 100") that there is no recognition result if there is no recognition result that is obtained from the plurality of voice recognizers within a predetermined time range.

12. The method as claimed in claim 7, wherein the performing parallel processing processes the received voice signal through a first voice recognizer among the plurality of voice recognizers and processes the received voice signal through a second voice recognizer among the plurality of voice recognizers.
